# EUROPEAN PATENT APPLICATION

(11) **EP 1 124 279 A1**
(43) Date of publication of application: **16.08.2001**
(21) Application number: 00300951.1
(22) Date of filing: 08.02.2000
(51) Int. Cl.: H01Q 1/22, H04B 1/38, H05K 5/02, G06F 1/16, G06K 19/077, H04L 12/28

(54) **Wireless transmission card**

(71) Applicant: Hewlett-Packard Company, A Delaware Corporation, Palo Alto, CA 94304 (US)
(72) Inventor: Waters, John Deryk, Combe Down, ath BA2 5AN (GB)
(74) Representative: Lawrence, Richard Anthony

(57) **Abstract**

A wireless transmission card (30) forming a plug-in module to a PCMCIA expansion port (20) of a host device (10) and having a contact-less capacitively coupled antenna connector (50) for coupling the wireless transmission card (30) to an antenna (40) mounted within the host device (10).

## Description

The present invention relates in general to a plug-in module for use with a host computer apparatus, and more particularly, but not exclusively, to a wireless transmission card formed as a plug-in module.

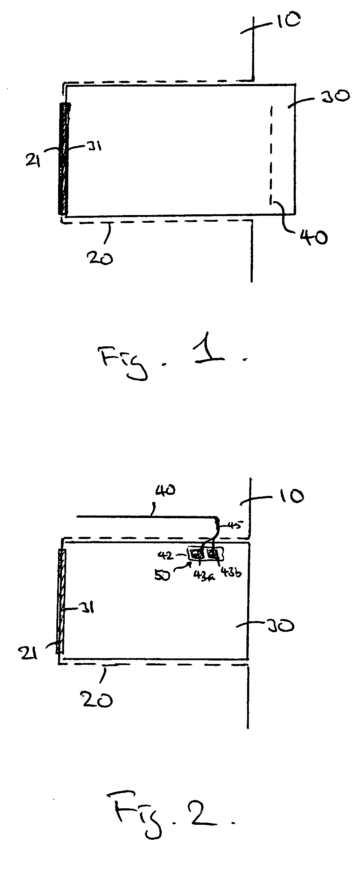

Figure 1 shows a prior art configuration for a host apparatus 10 such as a portable computer having an expansion port 20 for receiving a user-insertable and readily removable plug-in module 30. Electronic circuitry (not shown) carried by the plug-in module 30 is coupled to the host 10 through an edge connector 21. Normally the plug-in module 30 is sized to be received within a housing of the host 10 when inserted into the port 20. However, the housing of the host 10 typically includes electrical shielding used to prevent unwanted radiation from the host 10. The plug-in module 30 of Figure 1 is a wireless transmission card. An end portion of the card 30 carrying an antenna 40 is arranged to protrude from the host 10, so that wireless transmission to and from the antenna is not inhibited by the electrical shielding of the host.

A problem arises in that the antenna portion 40 of the wireless transmission card 30 is vulnerable to physical damage. For example, the host 10 may be a laptop computer weighing several kilos, and careless movement by the user can easily lead to irreparable damage to the relatively thin and brittle wireless transmission card 30. Another problem arises in that the size, style and position of the antenna 40 relative to the host 10 is severely limited by the available dimensions of the card 30. The card 30 is limited in size by the need to fit into a predetermined general purpose expansion port 20, usually defined by widely adopted industry standards, and the card 30 must remain relatively easy to carry and store when removed from the host 10. These factors tend to limit design freedom to make structural improvements to the card itself.

An aim of the present invention is to provide a wireless transmission card for use as a plug-in module with a host device, wherein an antenna portion is less vulnerable to damage than in the prior art described above or otherwise. A preferred aim of the present invention is to allow greater design freedom in the style, size or position of the antenna relative to the host device.

According to the present invention there is provided a wireless transmission card as set forth in claim 1 appended hereto. Also according to the present invention there is provided a host device as set forth in claim 8 appended hereto. Preferred features of the present invention will be apparent from the dependent claims and the description which follows.

According to a first aspect of the present invention there is provided a wireless transmission card formed as a plug-in module for use with a host device, the card comprising an antenna connector for capacitively coupling the card to an antenna arranged on the host device.

Preferably, the card is insertable into an expansion port of the host device, and the card is dimensioned to reside substantially wholly within the expansion port of the host device when inserted therein.

Preferably, the wireless transmission card comprises an edge connector for directly electrically connecting the wireless transmission card to an edge connector of the expansion port of the host device.

Preferably, the antenna connector comprises a first capacitor plate arranged for capacitive coupling in use to a corresponding second capacitor plate located within the host device.

Preferably, the first capacitor plate is arranged generally parallel to a major planar surface of the wireless transmission card.

Preferably, the wireless transmission card comprises an insulating and protecting layer between the conductive plate and the face of the card.

The wireless transmission card may comprise a mechanical ground connector and a capacitor plate. Preferably, the wireless transmission card comprises a pair of first capacitor plates each arranged for capacitive coupling to a respective one of a corresponding pair of second capacitor plates located within the host device.

According to a second aspect of the present invention there is provided a host device, comprising an expansion port for receiving a wireless transmission card formed as a plug-in module; an antenna; and an antenna connector for capacitively coupling the antenna to the plug-in module when received within the expansion port.

Preferably, the antenna connector comprises a conductive plate arranged to lie generally parallel to a major planar surface of the plug-in module. Preferably, the host device comprises a biasing element for biasing the conductive plate to lie close adjacent a major planar surface of the plug-in module. Preferably, the conductive plate carries an insulating and protecting dielectric layer.

Preferably, the host device comprises a pair of first conductive plates each arranged for capacitive coupling in use to a respective one of a corresponding pair of second conductive plates arranged within the plug-in module. Alternatively, the host device may comprise a mechanical ground connector and a first conductive plate. Preferably, the or each respective first and second conductive plates form a capacitor of about 2.5pF.

Preferably, the host device comprises a plurality of antenna diversely arranged about the computer device; and an antenna connector for each antenna.

For a better understanding of the invention, and to show how embodiments of the same may be carried into effect, reference will now be made, by way of example, to the accompanying diagrammatic drawings in which:
Figure 1 is a plan view of a prior art wireless transmission card;
Figure 2 is a plan view of a wireless transmission card and host according to a preferred embodiment of the present invention;
Figure 3 is a detailed view of a contact-less antenna connection used in a preferred embodiment of the present invention; and
Figure 4 is a plan view of a second preferred embodiment of the present invention.

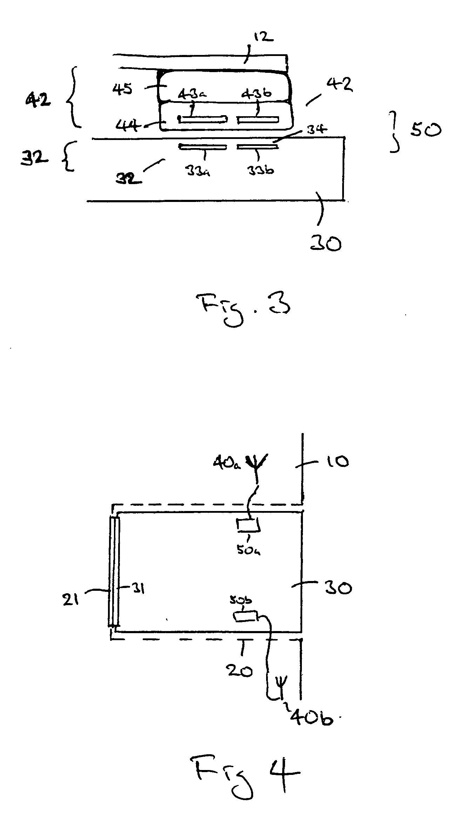

Figure 2 shows a host computer device 10 having an expansion port 20, and shows a wireless transmission card 30 according to a preferred embodiment of the present invention. The host device 10 may take any suitable form, including, for example, a desk top personal computer, a personal digital assistant, a laptop computer or a palm top computer. The expansion port 20 may take any suitable form for receiving a user-insertable and removable plug-in module 30. In the preferred embodiment the expansion port 20 is dimensioned to receive a PC-card and includes a PCMCIA edge connector 21. The edge connector 21 makes direct electrical contact to a corresponding edge connector 31 on the plug-in module 30.

The wireless transmission card 30 of the preferred embodiment is a plug-in module conforming with the expansion port 20 and the edge connector 21. As shown in Figure 2, the wireless transmission card 30 is dimensioned to be received within the confines of the host device 10, and is inserted to lie wholly within the expansion port 20. Since the wireless card 30 is wholly locatable within the expansion port 20 of the host 10, no portion of the card 30 extends beyond the outer dimensions of the host 10 and the card 30 is physically protected by the host.

As shown in Figure 2, an antenna 40 is provided within the host device 10 separate from the wireless transmission card 30. The antenna 40 is coupled to the card 30 via a contact-less connector 50.

The PCMCIA connector 21 is an example of a generic expansion port capable of receiving cards having a variety of different functions. Originally, the PCMCIA format cards were intended to be memory cards. Hence, the edge connector 21 contains no facility for coupling an antenna 40 to the plug-in module 30. Further, to ensure that the edge connector 21 remains capable of receiving cards having other functions, it is not possible to specifically adapt the edge connector to provide an antenna connection.

The wireless transmission card 30 contains circuitry (not shown) for wireless communication with a transceiver station remote from the host 10. In one embodiment the wireless transmission card 30 enables wireless connection to a local area network (LAN) arranged within a particular building or site. In other preferred embodiments the wireless transmission card 30 is suitable for communication with a cellular telephony network such as a GSM network. The antenna 40 sends and receives signals at one or more operating frequencies, which may fall in a relatively broad range. Suitably the operating frequency is range of about 500MHz to about 10GHz, and preferably in the range of about 1GHz to about 6GHz. In the preferred embodiment for use with a wireless LAN network, the operating frequency is about 2.4GHz or about 5GHz.

The antenna 40 may be provided at any suitable location with respect to the host device 10. This allows a relatively high degree of design freedom in the choice of size or style or position of the antenna with respect to the host. The antenna is no longer confined within the dimensions of the wireless transmission card 30. Ideally, the antenna 40 is located in an area of the host 10 which is not electrically shielded but which may be physically protected by a transmissive material such as plastics material. Where the host 10 is a laptop computer, preferred locations for the antenna 40 include (a) in the region of the expansion port 20, (b) in the region of a hinge coupling a screen portion and a keyboard portion of the computer, and (c) around or behind a user display screen.

The antenna 40 is coupled to the antenna connector 50 such as by a co-axial cable 45. The antenna connector 50 couples the antenna 40 to the wireless transmission card 30. The antenna connector 50 may be provided at any suitable location with respect to the wireless transmission card 30.

The antenna connector 50 is a contact-less connector comprising a host antenna connector portion 42 and a card antenna connector portion 32. Figure 3 shows a preferred embodiment of the antenna connector 50 in more detail.

Referring to Figure 3, the host antenna connector portion 42 comprises a planar sheet of conductive material, such as a metal plate 43. The plate 43 may be wholly or partially covered by a dielectric layer 44 for physical protection and electrical isolation. The dielectric layer 44 is preferably a plastics material such as a urethane polymer.

The card antenna connector portion comprises a second conductive metal plate 33 under a suitable insulating and protective layer 34. The two plates 33, 43 form a capacitor to capacitively couple the card 30 and the antenna 40.

Typically, each metal plate 33, 43 has a surface area of the order of 10mm². The total separation distance between the two plates is desirably of the order of 0.1 mm, including the two dielectric layers 34, 44 and any air gap therebetween. This structure provides a capacitor of about 2.5pF. For most applications such a capacitor is much too small to provide a signal path having an acceptably low impedance. However, for wireless communication at frequencies above about 500MHz and ideally about 2.4GHz or about 5GHz, the capacitive coupling of the antenna connector when resonated with a series inductor provides an acceptable signal path. In the preferred embodiment, the series inductor is about 1.8nH, which is an inductance that is readily realisable, and is included either in the wireless card or in the host device connected in series with the antenna connection.

As shown in Figure 3, the antenna connector 50 preferably comprises two pairs of plates, 33a, 43a and 33b, 43b, in order to provide a complete signal path between the co-axial coupling lead 45 and the wireless transmission card 30. Alternatively, a ground signal path is made through a mechanical connector. Suitably, the mechanical connector is provided by the edge connector 21, or by a mechanical contact to a conducting surface of the card 30.

Referring again to Figure 3, the plate 43 of the host antenna connector 42 is biased toward the wireless transmission card 30 and the second plate 33. This helps to eliminate any air gap and keep the two plates 33, 43 at a predetermined separation. The plate 43 of the host connector 42 is supported by a biasing element 45 such as a pad of resilient compressible material. The pad 45 is carried by a suitable support structure 12 such as a rigid portion of the host 10 in the vicinity of the expansion port 20.

The card 30 is conventionally received in the expansion port 20. A PCMCIA format PC card is guided by a pair of longitudinal rails (not shown) within the expansion port 20 and held relatively rigidly. The biasing element 45 may therefore press the first plate 43 of the host antenna connector portion 42 close adjacent a major planar surface of the wireless transmission card 30 containing the second plate 33 of the card antenna connector portion 32.

As shown in Figure 3, the host plate 43 is arranged generally parallel with the plate 33 of the card 30. That is, the host plate 43 and the card plate 33 are both arranged parallel to but spaced apart from a major planar surface of the card 30. Hence, the host connector 42 may conveniently rest on this surface of the card 30, above the card connector 32.

Figure 4 shows a second preferred embodiment of the present invention wherein two antennas 40a, 40b are provided within the host 10. Each antenna 40a, 40b is coupled to the card 30 by a respective antenna connector 50a,50b. The two antennas 40a, 40b may be spaced apart by a distance equivalent to about half the wavelength (λ/2) of the desired operating frequency in order to enable diversity of reception. The wireless transmission card 30 dynamically selects the first antenna 40a or the second antenna 40b having the best reception at that time. For a portable host device, the best antenna will tend to change as the device moves within the area covered by the transmitted signals.

As described above, the present invention provides a wireless transmission card having a contact-less capacitively coupled antenna connector for coupling to an antenna arranged within the host device. The wireless transmission card can be housed completely within the expansion port of the host device, which is aesthetically pleasing for the user and physically protects the card. Further, the contact-less antenna connection does not inhibit other plug-in modules from using the expansion port of the host, and in particular a wireless transmission card having a protruding antenna portion may still use the expansion port of the host. Further still, the antenna and the antenna portion of the antenna connector in themselves are relatively inexpensive and may be provided in the host device at relatively low cost. More expensive circuitry components for wireless transmission are mounted on the plug-in module, and can be changed or upgraded easily by replacing the plug-in module.

Whilst preferred embodiments of the present invention have been described above other changes and modifications will be apparent to the skilled person and are intended to fall within the scope of the present invention as defined in the following claims.

## Claims

1. A wireless transmission card formed as a plug-in module for use with a host device, the card comprising:
an antenna connector (50) for capacitively coupling the card (30) to an antenna (40) arranged on the host device (10).

2. A wireless transmission card as claimed in claim 1, wherein the card is insertable into an expansion port (20) of the host device (10), and the card (30) is dimensioned to reside substantially wholly within the expansion port (20) of the host device (10) when inserted therein.

3. A wireless transmission card as claimed in claim 2, comprising an edge connector (31) for directly electrically connecting the wireless transmission card (30) to an edge connector (21) of the expansion port (20) of the host device (10).

4. A wireless transmission card as claimed in claim 1, wherein the antenna connector (50) comprises a first capacitor plate (33) arranged for capacitive coupling in use to a corresponding second capacitor plate (43) located within the host device (10).

5. A wireless transmission card as claimed in claim 4, wherein the first capacitor plate (33) is arranged generally parallel to a major planar surface of the wireless transmission card (30).

6. A wireless transmission card as claimed in claim 5, comprising an insulating and protecting layer (34) between the conductive plate (33) and the face of the card (30).

7. A wireless transmission card as claimed in claim 6, comprising a pair of first capacitor plates (33a,33b) each arranged for capacitive coupling to a respective one of a corresponding pair of second capacitor plates (43a,43b) located within the host device (10).

8. A host device, comprising:
an expansion port (20) for receiving a wireless transmission card (30) formed as a plug-in module;
an antenna (40); and
an antenna connector (50) for capacitively coupling the antenna (40) to the plug-in module (30) when received within the expansion port (20).

9. A host device as claimed in claim 8, wherein the antenna connector (50) comprises a conductive plate (43) arranged to lie generally parallel to a major planar surface of the plug-in module (30).

10. A host device as claimed in claim 9, comprising a biasing element (45) for biasing the conductive plate (43) to lie close adjacent a major planar surface of the plug-in module (30).

11. A host device as claimed in claim 10, wherein the conductive plate (43) carries an insulating and protecting dielectric layer (44).

12. A host device as claimed in claim 11, comprising a pair of conductive plates (43a,43b) each arranged for capacitive coupling in use to a respective one of a corresponding pair of second conductive plates (33a,33b) arranged within the plug-in module (30).

13. A host device as claimed in claim 12, wherein each respective pair of conductive plates (33a,43a) (33b,43b) form a capacitor of about 2.5pF.

14. A host device as claimed in claim 8, comprising:
a plurality of antenna (40a, 40b) diversely arranged about the computer device; and
an antenna connector (50a,50b) for each antenna (40a,40b).
